(19) Europäisches Patentamt

European Patent Office

Office européen des brevets

(11) Veröffentlichungsnummer: **0 306 861 B1**

(12) **EUROPÄISCHE PATENTSCHRIFT**

(45) Veröffentlichungstag der Patentschrift: **30.12.92**

(21) Anmeldenummer: **88114396.0**

(22) Anmeldetag: **03.09.88**

(51) Int. Cl.⁵: **C09K 15/06**

(54) Stabilisierung von Chlorfluoralkanen.

(30) Priorität: **09.09.87 DE 3730221**

(43) Veröffentlichungstag der Anmeldung:
**15.03.89 Patentblatt 89/11**

(45) Bekanntmachung des Hinweises auf die
Patenterteilung:
**30.12.92 Patentblatt 92/53**

(84) Benannte Vertragsstaaten:
**AT BE CH DE ES FR GB GR IT LI LU NL SE**

(56) Entgegenhaltungen:
**FR-A- 1 420 190**
**US-A- 3 297 582**
**US-A- 3 361 833**

**JAPANESE PATENT OFFICE, File Producer**
**JAPS, Tokyo, JP; & JP-A-57 085 325 (ASAHI**
**GLASS CO., LTD)**

**JAPANSESE PATENT OFFICE, File Producer**
**JAPS, Tokyo, JP; & JP-A-57 085 326 (ASAHI**
**GLASS CO., LTD)**

(73) Patentinhaber: **Kali-Chemie Aktiengesellschaft**
**Postfach 220, Hans-Böckler-Allee 20**
**W-3000 Hannover 1(DE)**

(72) Erfinder: **Boedecker, Manfred**
**Am Uhrturm 28**
**W-3000 Hannover 81(DE)**
Erfinder: **Benecke, Thomas**
**Am Büchenberge 17**
**W-3000 Hannover 91(DE)**
Erfinder: **Krücke, Werner**
**Ferdinand-Wallbrecht-Strasse 52**
**W-3000 Hannover 1(DE)**
Erfinder: **Baumeister, Willi**
**Hauptstrasse 36**
**W-3176 Meinersen(DE)**

(74) Vertreter: **Lauer, Dieter, Dr.**
**c/o Kali-Chemie Aktiengesellschaft Postfach
220**
**W-3000 Hannover 1(DE)**

EP 0 306 861 B1

## Beschreibung

Die vorliegende Erfindung betrifft die Verwendung von 3-Methyl-but-3-en-1-ol zur Stabilisierung von Gemischen, die Chlorfluoralkane und Amine, Aminoalkohole und/oder Aminogruppen enthaltende Polyole enthalten und die zum Beispiel für die Herstellung von Polyurethanschäumen verwendet werden, ein Verfahren zur Stabilisierung solcher Gemische, die Gemische selbst sowie stabilisatorhaltige Chlorfluoralkane.

Bei der Herstellung von Polyurethanschäumen werden Isocyanate mit mehrwertigen Alkoholen zu Polymerisaten von hohem Molekulargewicht umgesetzt, die die Polyurethanverknüpfung enthalten. Wenn geschäumte Polymerisate erwünscht sind, wird dem Isocyanat oder dem mehrwertigen Alkohol (Polyol) oder beiden ein Treibmittel, häufig ein Chlorfluoralkan, zugesetzt. Durch die während der Polymerisation entstehende Reaktionswärme wird das Treibmittel verdampft und so ein geschäumtes Produkt von geringer Dichte erhalten.

Wenn die zur Herstellung von Polyurethanschaumstoffen benötigten Verbindungen direkt vor der Umsetzung miteinander vermischt werden, kann leicht ein Schaumstoff mit guten Eigenschaften erzeugt werden. Aus praktischen Gründen wird allerdings oft nur die Diisocyanatkomponente bis zum Verschäumen getrennt aufbewahrt. Alle weiteren für die Schaumstoffherstellung benötigten Komponenten, wie Katalysatoren, z.B. Aminkatalysatoren, Emulgatoren und das Treibmittel bzw. Treibmittelgemisch werden mit dem Polyol vorgemischt. Diese Vorgemische müssen bis zur Verwendung über längere Zeiträume gelagert werden können, ohne daß eine Umsetzung oder ein Abbau erfolgt, wodurch die Qualität des erzeugten Schaumstoffes beeinträchtigt würde.

Eine derartige Verfahrensweise ist aber nur mit Nicht-Amin-Polyolen, d.h. Polyolen die als Elemente nur Kohlenstoff, Wasserstoff und Sauerstoff enthalten, gut durchführbar, vorausgesetzt, daß die vorformulierten Mischungen bei der Lagerung keinen extremen Temperaturen ausgesetzt werden. Im Fall von Aminen, Aminoalkoholen und der Polyole auf Aminbasis, d.h. Polyolen, die außer den genannten Elementen Kohlenstoff, Wasserstoff und Sauerstoff noch Stickstoff enthalten, und die z.B. Amin-oder Alkanolamin gestartete Polyäther mit freien Hydroxylgruppen darstellen, erfolgt jedoch eine Umsetzung zwischen dem Amin, dem Aminoalkohol bzw. dem aminbasischen Polyol einerseits und den als Treibmittel eingesetzten Chlorfluoralkanen andererseits. Hierdurch kommt es über die Bildung von Chlorwasserstoff zur Absenkung des pH-Wertes und damit verbunden zur Verminderung der Lagerstabilität der flüssigen Gemische. Außerdem wird die Lösung dunkler, ihre Viskosität nimmt zu, es lassen sich nur Schaumstoffe schlechter Qualität herstellen oder die Gemische werden für die Schaumstoffherstellung sogar unbrauchbar.

Aus der DE-Patentschrift 1 207 626 ist es nun bekannt, daß diesen Gemischen, die aminbasische Polyole neben Chlorfluoralkanen enthalten, ungesättigte Verbindungen - wie z.B. Butadien, Isopren, Styrol, α-Methylstyrol oder 1-Alkene mit 4 bis 18 Kohlenstoffatomen - als Stabilisatoren zugesetzt werden können, während ungesättigte sauerstoffhaltige Verbindungen wie z.B. Vinylacetat oder Methylvinylketone für die gleichen Zwecke als unwirksam bezeichnet werden.

Aus der FR-A-1 420 190 ist die Verwendung von ungesättigten organischen Verbindungen wie α-Methylstyrol, Dipenten, Anethol, Indol, Dimethylhexadien, Piperylen, p-Mentha-1,5-dien, m-Diisopropylbenzol, 1,3,5-Triisopropenylbenzol, 1-(p-Methoxyphenyl)-2-nitro-1-propen oder 1-Methoxy-1,3-butadien zur Stabilisierung von Trichlorfluormethan, Trichlortrifluorethan oder Tetrachlordifluorethan gegenüber einer Umsetzung mit primären oder sekundären Alkoholen bekannt.

Aus der DE-Patentschrift 1 518 461 ist bekannt, daß neben α-Methylstyrol auch Anethol (= 1-(p-Methoxyphenyl)-propen-1), m-Diisopropenylbenzol, 1,3,5-Triisopropenylbenzol und 1-(p-Methoxyphenyl)-2-nitro-propen-1 zur Stabilisierung verwendet werden können.

Weiterhin beschreiben die DE-Patentschrift 1 618 291 die Verwendung von p-Isopropenyl-toluol (p-Methyl-α-methylstyrol) und die DE-Patentschrift 3 139 401 die Verwendung eines isomeren Gemisches aus 2,4-Diphenyl-4-methylpentenen ("dimeres α-Methylstyrol") zur Inhibierung der Umsetzung der Amine, der Aminoalkohole oder des Aminogruppen enthaltenden Polyols mit dem Chlorfluoralkan.

Es ist dabei von Nachteil, daß die genannten Verbindungen ihre Stabilisatorwirkung nur für relativ kurze Lagerzeiten und auch dann in einigen Fällen nur unbefriedigend erfüllen. Wird eine gewisse Lagerzeit überschritten, treten zunehmend wieder Reaktionen zwischen dem Amin, dem Aminoalkohol oder dem aminbasischen Polyol und dem Chlorfluoralkan auf. Ebenso wie bei nichtstabilisierten Gemischen kommt es durch diese Umsetzungen über die Bildung von Chlorwasserstoff zum Absinken des pH-Wertes und zu einem Anstieg der Viskosität. Die Gemische verfärben sich, werden durch Niederschlag von Hydrochloriden getrübt und zusätzlich weniger reaktiv. Solche gealterten Gemische zeigen beim Verschäumen verlängerte Startzeiten, verlängerte Abbindezeiten und verlängerte Klebfreizeiten. Darüber hinaus ergeben sie Schaumstoffe schlechter Qualität, d.h. Schaumstoffe von dunkler Farbe mit uneinheitlichen, häufig zu großen Zellen oder sie lassen sich zur Schaumstoffherstellung sogar nicht mehr verwenden.

Ein weiterer Nachteil besteht darin, daß anwesende Metalle den Alterungsprozeß katalysieren und beschleunigen können, wodurch bei der an sich üblichen Aufbewahrung der vorgefertigten Polyolmischungen in Stahlblechbehältern oder Metallfässern die maximale Lagerzeit zusätzlich herabgesetzt wird. Die durch die Alterung der Gemische begünstigte Korrosion der Behälter verursacht dabei noch zusätzliche Probleme.

Die Aufgabe der Erfindung besteht daher darin, die Nachteile des Standes der Technik zu überwinden. Eine besondere Aufgabe liegt darin, besser stabilisierte Gemische zur Verfügung zu stellen. die Chlorfluoralkane und Amine, einschließlich der Aminoalkohole und/oder Aminogruppen enthaltende Polyole enthalten und die als Vormischung für die Schaumstoffherstellung geeignet sind. Die Aufgaben werden durch die erfindungsgemäßen Verwendungen, Verfahren und Produkte gelöst.

Es wurde nun gefunden, daß durch die Verwendung von 3-Methyl-but-3-en-1-ol eine vorteilhafte stabilisierende Wirkung erzielt wird. Erfindungsgemäß wird zum Stabilisieren von Zusammensetzungen, die Chlorfluoralkane und Amine, einschließlich der Aminoalkohole, und bzw. oder Aminogruppen enthaltende Polyole enthalten, 3-Methyl-but-3-en-1-ol verwendet.

Die wirksame Struktureinheit in 3-Methyl-but-3-en-1-ol ist die Kombination einer endständigen Doppelbindung mit einer bezüglich dieser Doppelbindung $\beta$-ständigen Hydroxylgruppe.

3-Methyl-but-3-en-1-ol wird erfindungsgemäß zum Stabilisieren von Zusammensetzungen, die Chlorfluoralkane und Amine, einschließlich der Aminoalkohole, und bzw. oder Aminogruppen enthaltende Polyole enthalten, eingesetzt. Man verwendet die erfindungsgemäßen Stabilisatoren in Mengen von 0,05 bis 5 Gew.-%, vorzugsweise von 0,3 bis 1,5 Gew-% bezogen auf das Chlorfluoralkan. In einem Beispiel der Erfindung beträgt der Gewichtsanteil an 3-Methyl-but-3-en-1-ol 0,75 Gew.-% bezogen auf das Chlorfluoralkan.

Chlorfluoralkane im Sinne der Erfindung sind als Treibmittel an sich bekannte Verbindungen, z.B. perhalogenierte $C_1$ bis $C_2$-Alkane, insbesondere Trichlorfluormethan, 1,1,2-Trichlor-1,2,2-trifluorethan, 1,1,1-Trichlor-2,2,2-trifluorethan, Tetrachlor-1,2-difluorethan, Tetrachlor-2,2difluorethan und Mischungen aus zwei oder mehr dieser Verbindungen. Besonders geeignet ist Trichlorfluormethan.

Als Amine im Rahmen der vorliegenden Erfindung können an sich bekannte Aminkatalysatoren, wie gesättigte oder ungesättigte aliphatische, cycloaliphatische oder heterocyclische Amine verwendet werden. Beispiele sind Triethylamin, Methyl-bis-dimethylaminoethyl-amin, N,N,N',N'-Tetramethylethylendiamin, Triethylendiamin, Dimethylcyclohexylamin, N,N,N',N'-Tetramethyl-1,3-butandiamin, 1,1,3,3-Tetramethylguanidin, 1,2,4-Trimethylpiperazin, N-Cyclohexylpiperidin, 4-Dimethylaminopyridin, N-Methylmorpholin oder Morpholin.

Weiterhin können auch andere übliche Amine, z.B. N-Ethylmorpholin, N,N'-Dimethylbenzylamin, N,N-Dimethyl-(N,N'-dimethylamino)piperazin, N,N-Dimethylpiperazin, Hexadecyldimethylamin, Diethylcyclohexylamin, N-Phenylcyclohexylamin verwendet werden.

Weiterhin können als Amine im Sinne der Erfindung an sich bekannte Aminoalkohole, z.B. Dimethylethanolamin, Diethanolamin, N-Methyldiethanolamin, Triethanolamin, Diisopropanolamin oder N,N,N',N'-Tetrakis(2-hydroxypropyl)ethylendiamin, eingesetzt werden. Außerdem können auch andere übliche Aminoalkohole, wie z.B. Diethylethanolamin oder 1,4-Bis-(2-hydroxypropyl)-2-methylpiperazin eingesetzt werden.

Unter Aminogruppen-haltigen Polyolen im Sinne der Erfindung versteht man mit Aminen, Alkanolaminen oder aromatischen Aminen gestartete Polyether mit einem Restgehalt an Hydroxylgruppen. Solche Polyole auf der Grundlage von Aminen sind z.B. Reaktionsprodukte von Ethylen- und bzw. oder Propylenoxid mit Aminen z.B. mit Diethylentriamin, Ethylendiamin, Triethanolamin oder Toluylendiamin. Es versteht sich, daß im Sinne der Erfindung außer den oben genannten Polyolsystemen auch andere übliche Polyole eingesetzt werden können. In geeigneter Weise wird ein aminbasisches Polyol mit einer Hydroxylzahl von 485 bis 515 eingesetzt.

Die Erfindung umfaßt auch ein Verfahren zum Stabilisieren von Zusammensetzungen, die ein Chlorfluoralkan und Amine, einschließlich der Aminoalkohole, und bzw. oder Aminogruppen enthaltende Polyole enthalten. Man arbeitet hierbei 0,05 bis 5 Gew.-% 3-Methyl-but-3-en-1-ol in das Gemisch ein. In einem Beispiel der vorliegenden Erfindung werden 0,75 Gew.-% 3-Methyl-but-3-en-1-ol zugesetzt, wobei die Gewichtsanteile der Stabilisatoren auf das Chlorfluoralkan bezogen werden.

Weiterhin umfaßt die Erfindung Zusammensetzungen, die Chlorfluoralkan, Amine, einschließlich der Aminoalkohole, und bzw. oder Aminogruppen-haltige Polyole und als Stabilisator 3-Methyl-but-3-en-1-ol enthalten. In einem Beispiel der erfindungsgemäßen Zusammensetzungen ist als stabilisierende Verbindung 3-Methyl-but-3-en-1-ol enthalten.

Darüber hinaus umfaßt die Erfindung auch Chlorfluoralkane oder deren Gemische, welche 3-Methyl-but-3-en-1-ol in einer Menge enthalten, die zur Stabilisierung von Zusammensetzungen, die diese Chlorfluoralkane und Amine, einschließlich der Aminoalkohole, und/oder Aminogruppen-haltigen Polyole enthalten, ausreicht.

Die erfindungsgemäßen Zusammensetzungen, welche durch 3-Methyl-but-3-en-1-ol stabilisiert sind, weisen vorteilhafte Eigenschaften auf. Die Zusammensetzungen sind über sehr lange Zeiträume stabil, d.h. der pH-Wert und die Viskosität der Gemische verändern sich nur geringfügig. Dies gilt selbst bei Gegenwart von Kesselstahl und ist aufgrund der üblichen Lagerung in Stahlblechbehältern oder Metallfässern besonders bedeutsam. Die erfindungsgemäßen Zusammensetzungen sind den in bekannter Weise, mit den üblichen im Stand der Technik verwendeten Verbindungen stabilisierten Zusammensetzungen in ihrer Stabilität und guten Lagerfähigkeit überlegen.

Weiterhin bewähren sie sich als überraschend gut geeignet für die Herstellung von Schaumstoffen hoher Qualität.

Zum Nachweis der Überlegenheit der erfindungsgemäß als Stabilisatoren verwendeten Verbindungen wurde die Wirkung des 3-Methyl-but-3-en-1-ols mit derjenigen des "dimeren α-Methylstyrols" (bekannt aus der DE-Patentschrift 3 139 401) verglichen, wie dies in den Beispielen näher ausgeführt wird.

Die nachfolgenden Beispiele sollen die Erfindung näher erläutern, ohne sie jedoch in ihrem Umfang zu begrenzen.

Beispiele

Für die nachfolgenden Versuche wurden die erfindungsgemäße Zusammensetzung I (enthaltend 3-Methyl-but-3-en-1-ol) und die Vergleichszusammensetzung II (enthaltend "dimeres α-Methylstyrol") verwendet:

| Zusammensetzung Nr. | | | I | II |
|---|---|---|---|---|
| Polyether auf Aminbasis | (Gew.-Tle.) | | 100,0 | 100,0 |
| Polysiloxan (Si-Copolymer) | | " | 0,8 | 0,8 |
| Dimethylcyclohexylamin | " | " | 2,0 | 2,0 |
| Wasser | " | " | 1,0 | 1,0 |
| Trichlorfluormethan stabilisiert durch 0,75 Gew.-% dim. α-Methylstyrol | " | " | -- | 30,0 |
| Trichlorfluormethan stabilisiert durch 0,75 Gew.-% 3-Methyl-but-3-en-1-ol | " | " | 30,0 | -- |

Die Zusammensetzungen wurden in Glasgefäßen in Gegenwart von Kesselstahl bei +50 °C zunächst 8 Wochen gelagert und danach durch die Bestimmung der in der folgenden Tabelle zusammengefaßten Parameter charakterisiert. Die Lagerung der Gemische über 8 Wochen bei +50 °C entspricht hierbei einer Lagerzeit von ca. 10 Monaten bei 20 °C.

|  | Zeit (Wochen) | Zusammensetzung Nr. | |
|---|---|---|---|
|  |  | I | II |
| pH-Wert | 0<br>8 | 10,8<br>9,2 | 10,9<br>8,5 |
| Viskosität (mPa s) | 0<br>8 | 128<br>138 | 120<br>169 |
| Startzeit (s) | 0<br>8 | 17<br>17 | 17<br>30 |
| Abbindezeit (s) | 0<br>8 | 75<br>85 | 80<br>135 |
| Klebfreizeit (s) | 0<br>8 | 110<br>110 | 115<br>180 |

**Patentansprüche**

**Patentansprüche für folgende Vertragsstaaten : AT, BE, CH, DE, FR, GB, GR, IT, LU, NL, SE**

1. Verwendung von 3-Methyl-but-3-en-1-ol zur Stabilisierung von Zusammensetzungen, enthaltend Chlorfluoralkane und Amine und/oder Aminogruppen enthaltende Polyole.

2. Verwendung gemäß Anspruch 1, dadurch gekennzeichnet, daß 3-Methyl-but-3-en-1-ol in Mengen von 0,05 bis 5 Gew.-%, vorzugsweise von 0,3 bis 1,5 Gew.-%, bezogen auf das Chlorfluoralkan verwendet wird.

3. Verwendung gemäß Anspruch 1, dadurch gekennzeichnet, daß die Amine Aminkatalysatoren sind, wie z.B gesättigte oder ungesättigte aliphatische, cycloaliphatische oder heterocyclische Amine, vorzugsweise Triethylamin, Methyl-bis-dimethylaminoethyl-amin, N,N,N',N'-Tetramethylethylendiamin, Triethylendiamin, Dimethylcyclohexylamin, N,N,N',N'-Tetramethyl-1,3-butandiamin, 1,1,3,3-Tetramethylguanidin, 1,2,4-Trimethylpiperazin, N-Cyclohexylpiperidin, 4-Dimethylaminopyridin, N-Methylmorpholin oder Morpholin.

4. Verwendung gemäß Anspruch 1, dadurch gekennzeichnet, daß die Amine Aminoalkohole, vorzugsweise Dimethylethanolamin, Diethanolamin, N-Methyldiethanolamin, Triethanolamin, Diisopropanolamin oder N,N,N',N'-Tetrakis(2-hydroxypropyl)ethylendiamin, sind.

5. Verwendung gemäß Anspruch 1, dadurch gekennzeichnet, daß die Aminogruppen-haltigen Polyole Amin- oder Alkanolamin gestartete Polyäther mit einem Restgehalt an Hydroxylgruppen sind.

6. Verfahren zum Stabilisieren von Zusammensetzungen, enthaltend Chlorfluoralkane und Amine und/oder Aminogruppen enthaltende Polyole, dadurch gekennzeichnet, daß man in die Zusammensetzung 0,05 bis 5 Gew.-% 3-Methyl-but-3-en-1-ol einarbeitet.

7. Zusammensetzungen, enthaltend Chlorfluoralkane und Amine und/oder Aminogruppen enthaltende Polyole und 3-Methyl-but-3-en-1-ol als Stabilisator.

**Patentansprüche für folgenden Vertragsstaat : ES**

1. Verfahren zur Stabilisierung von Zusammensetzungen, enthaltend Chlorfluoralkane und Amine und/oder Aminogruppen enthaltende Polyole, dadurch gekennzeichnet, daß man 3-Methyl-but-3-en-1-ol verwendet.

2. Verfahren gemäß Anspruch 1, dadurch gekennzeichnet, daß man 3-Methyl-but-3-en-1-ol in Mengen von 0,05 bis 5 Gew.-%, vorzugsweise von 0,3 bis 1,5 Gew.-%, bezogen auf das Chlorfluoralkan verwendet.

3. Verfahren gemäß Anspruch 1, dadurch gekennzeichnet, daß die Amine Aminkatalysatoren sind, wie z.B gesättigte oder ungesättigte aliphatische, cycloaliphatische oder heterocyclische Amine, vorzugsweise Triethylamin, Methyl-bis-dimethylaminoethyl-amin, N,N,N',N'-Tetramethylethylendiamin, Triethylendiamin, Dimethylcyclohexylamin, N,N,N',N'-Tetramethyl-1,3-butandiamin, 1,1,3,3-Tetramethylguanidin, 1,2,4-Trimethylpiperazin, N-Cyclohexylpiperidin, 4-Dimethylaminopyridin, N-Methylmorpholin oder Morpholin.

4. Verfahren gemäß Anspruch 1, dadurch gekennzeichnet, daß die Amine Aminoalkohole, vorzugsweise Dimethylethanolamin, Diethanolamin, N-Methyldiethanolamin, Triethanolamin, Diisopropanolamin oder N,N,N',N'-Tetrakis(2-hydroxypropyl)ethylendiamin, sind.

5. Verfahren gemäß Anspruch 1, dadurch gekennzeichnet, daß die Aminogruppen-haltigen Polyole Amin- oder Alkanolamin gestartete Polyäther mit einem Restgehalt an Hydroxylgruppen sind.

6. Verfahren gemäß Anspruch 1, dadurch gekennzeichnet, daß man in die Zusammensetzung 0,05 bis 5 Gew.-% 3-Methyl-but-3-en-1-ol einarbeitet.

7. Zusammensetzungen, enthaltend Chlorfluoralkane und Amine und/oder Aminogruppen enthaltende Polyole und 3-Methyl-but-3-en-1-ol als Stabilisator.

## Claims
## Claims for the following Contracting States : AT, BE, CH, DE, FR, GB, GR, IT, LU, NL, SE

1. The use of 3-methyl-but-3-en-1-ol for the stabilization of compositions which contain chlorofluoroalkanes and amines and/or polyols containing amino groups.

2. The use according to Claim 1, characterised in that 3-methyl-but-3-en-1-ol is used in quantities of 0.05 to 5% by weight, preferably of 0.3 to 1.5% by weight, relative to the chlorofluoroalkane.

3. The use according to Claim 1, characterised in that the amines are amine catalysts, such as saturated or unsaturated aliphatic, cycloaliphatic or heterocyclic amines, preferably triethylamine, methyl-bis-dimethylaminoethyl-amine, N,N,N',N'-tetramethylethylenediamine, triethylenediamine, dimethylcyclohexylamine, N,N,N',N'-tetramethyl-1,3-butanediamine, 1,1,3,3-tetramethylguanidine, 1,2,4-trimethylpiperazine, N-cyclohexylpiperidine, 4-dimethylaminopyridine, N-methylmorpholine or morpholine.

4. The use according to Claim 1, characterized in that the amines are aminoalcohols, preferably dimethylethanolamine, diethanolamine, N-methyldiethanolamine, triethanolamine, diizopropanolamine or N,N,N',N'-tetrakis(2-hydroxypropyl)ethylenediamine.

5. The use according to Claim 1, characterised in that the polyols containing amino groups are amine- or alkanolamine-started polyethers with a residual content of hydroxyl groups.

6. A method for the stabilisation of compositions containing chlorofluoroalkanes and amines and/or polyols containing amino groups, characterised in that 0.05 to 5% weight 3-methyl-but-3-en-1-ol is worked into the composition.

7. Compositions containing chlorofluoroalkanes and amines and/or polyols containing amino groups and 3-methyl-but-3-en-1-ol as stabiliser.

## Claims for the following Contracting State : ES

1. A method for the stabilisation of compositions which contain chlorofluoroalkanes and amines and/or polyols containing amino groups, characterised in that 3-methyl-but-3-en-1-ol is used.

2. A method according to Claim 1, characterised in that 3-methyl-but-3-en-1-ol is used in quantities of 0.05 to 5% by weight, preferably of 0.3 to 1.5% by weight, relative to the chlorofluoroalkane.

3. A method according to Claim 1, characterised in that the amines are amine catalysts, such as saturated or unsaturated aliphatic, cycloaliphatic or heterocyclic amines, preferably triethylamine, methyl-bis-dimethylaminoethyl-amine, N,N,N',N'-tetramethylethylenediamine, triethylenediamine, dimethylcyclohexylamine, N,N,N',N'-tetramethyl-1,3-butanediamine, 1,1,3,3-tetramethylguanidine, 1,2,4-trimethylpiperazine, N-cyclohexylpiperidine, 4-dimethylaminopyridine, N-methylmorpholine or morpholine.

4. A method according to Claim 1, characterised in that the amines are aminoalcohols, preferably dimethylethanolamine, diethanolamine, N-methyldiethanolamine, triethanolamine, diisopropanolamine or N,N,N',N'-tetrakis(2-hydroxypropyl)ethylenediamine.

5. A method according to Claim 1, characterised in that the polyols containing amino groups are amine- or alkanolamine-started polyethers with a residual content of hydroxyl groups.

6. A method according to Claim 1, characterised in that 0.05 to 5% weight 3-methyl-but-3-en-1-ol is worked into the composition.

7. Compositions containing chlorofluoroalkanes and amines and/or polyols containing amino groups and 3-methyl-but-3-en-1-ol as stabilizer.

## Revendications
**Revendications pour les Etats contractants suivants : AT, BE, CH, DE, FR, GB, GR, IT, LU, NL, SE**

1. Utilisation du 3-méthyl-but-3-ène-1-ol pour stabiliser des compositions contenant des chlorofluoralcanes et des amines et/ou des polyols contenant des groupes amino.

2. Utilisation selon la revendication 1 , caractérisée en ce qu'on utilise le 3-méthyl-but-3-ène-1-ol en des quantités de 0,05 à 5 % en poids , avantageusement de 0,3 à 1,5 % en poids par rapport au chlorofluoralcane .

3. Utilisation selon la revendication 1 ,caractérisée en ce que les amines sont des catalyseurs aminés, comme par exemple des amines aliphatiques,cycloaliphatiques ou hétérocycliques saturées ou insaturées ,avantageusement la triéthylamine,la méthyl-bis-diméthylaminoéthyl-amine ,la N,N,N',N'-tétraméthyléthylènediamine,la triéthylènediamine,la diméthylcyclohexylamine,la N,N,N',N'-tétraméthyl-1,3-butanediamine,la 1,1,3,3-tétraméthylguanidine ,la 1,2,4-triméthylpipérazine , la N-cyclohexyl-pipéridine ,la 4-diméthylaminopyridine,la N-méthylmorpholine ou la morpholine .

4. Utilisation selon la revendication 1 ,caractérisée en ce que les amines sont des amino-alcools,avantageusement la diméthyléthanolamine,la diéthanolamine,la N-méthyldiéthanolamine, la triéthanolamine, la diisopropanolamine,ou la N,N,N'N'-tétrakis(2-hydroxypropyl)éthylènediamine .

5. Utilisation selon la revendication 1 , caractérisée en ce que les polyols contenant des groupes amino sont des polyéthers obtenus par démarrage sur une amine ou une alcanolamine et comportant une teneur résiduelle en des groupes hydroxyles .

6. Procédé pour stabiliser des compositions contenant des chlorofluoralcanes et des amines et/ou des polyols contenant des groupes amino, caractérisé en ce qu'on incorpore à la composition 0,05 à 5 % en poids de 3-méthyl-but-3-ène-1-ol.

7. Compositions contenant des chlorofluoralcanes et des amines et/ou des polyols contenant des groupes amino et,comme stabilisant,du 3-méthyl-but-3-ène-1-ol .

**Revendications pour l'Etat contractant suivant : ES**

1. Procédé de stabilisation de compositions contenantdes chlorofluoralcanes et des amines et/ou des polyols contenant des groupes amino,caractérisé en ce qu'on utilise du 3-méthyl-but-3-ène-1-ol.

2. Procédé selon la revendication 1 ,caractérisé en ce qu'on utilise le 3-méthyl-but-3-ène-1-ol en des quantités de 0,05 à 5 % en poids,avantageusement de 0,3 à 1,5 % en poids , par rapport au chlorofluoralcane .

3. Procédé selon la revendication 1 ,caractérisé en ce que les amines sont des catalyseurs aminés comme par exemple des amines aliphatiques,cycloaliphatiques ou hétérocycliques,saturées ou insaturées,avantageusement la triéthylamine,la méthyl-bis-diméthylaminoéthyl-amine,la N,N,N',N'-tétraméthyléthylènediamine , la triéthylènediamine,la diméthylcyclohexylamine,la N,N,N',N'-tétraméthyl-1,3-butanediamine,la 1,1,3,3-tétraméthylguanidine, la 1,2,4-triméthylpipérazine,la N-cyclohexylpipéridine,la 4-diméthylaminopyridine,la N-méthylmorpholine ou la morpholine.

4. Procédé selon la revendication 1 ,caractérisé en ce que les amines sont des amino-alcools,avantageusement la diméthyléthanolamine,la diéthanolamine,la N-méthyldiéthanolamine, la triéthanolamine,la diisopropanolamine ou la N,N,N',N'-tétrakis(2-hydroxypropyl)éthylènediamine .

5. Procédé selon la revendication 1,caractérisé en ce que les polyols contenant des groupes amino sont des polyéthers obtenus par démarrage avec une amine ou une alcanolamine et comportant une teneur résiduelle en des groupes hydroxyles .

6. Procédé selon la revendication 1 ,caractérisé en ce qu'on incorpore à la composition 0,05 à 5 % en poids de 3-méthyl-but-3-ène-1-ol .

7. Compositions contenant des chlorofluoralcanes et des amines et/ou des polyols contenant des groupes amino et,comme stabilisant,du 3-méthyl-but-3-ène-1-ol .